# EUROPEAN PATENT APPLICATION

(11) **EP 4 704 037 A1**
(43) Date of publication of application: **04.03.2026**
(21) Application number: 24197472.4
(22) Date of filing: 30.08.2024
(51) Int. Cl.: G06T 11/00

(54) **CT IMAGING METHOD**

(71) Applicant: Koninklijke Philips N.V., 5656 AG Eindhoven (NL)
(72) Inventor: GRASS, Michael, Eindhoven (NL); KABUS, Sven, Eindhoven (NL); WILD, Sebastian, 5656AG Eindhoven (NL); KOEHLER, Thomas, Eindhoven (NL)
(74) Representative: Philips Intellectual Property & Standards

(57) **Abstract**

An image reconstruction method is provided for reducing step artefacts when reconstructing step-and-shoot CT image data. The method is based on artificially augmenting or expanding the field of view in an axial direction of at least one projection of at least one projection dataset corresponding to one axial position of the step-and-shoot CT protocol. Accordingly an axial overlap volume between a reconstruction (sub-)volume of the at least one projection dataset and an axially adjacent projection dataset is increased. This allows for more robust and accurate registration between the said overlapping reconstruction volumes. Accordingly step artefacts in the composite reconstructed volume comprising both adjacent sub-volumes is improved.

## Description

### FIELD OF THE INVENTION

The present invention relates to the field of computed tomography (CT) imaging, and in particular to CT image reconstruction.

### BACKGROUND OF THE INVENTION

Within the field of CT imaging, there are different possible CT scanning modes.

One mode of CT scan is helical imaging. In this mode, the X-ray source, carried by a rotatable gantry, continuously rotates around a patient while the patient is simultaneously and continuously moved through the gantry. This creates a helical (sometimes also called spiral) path of data acquisition. Helical scanning can achieve faster scan times. In some applications, it may reduce total radiation dose.

A different mode of CT scan is sequential CT scanning (otherwise known as step-and-shoot or axial scanning). In sequential CT scanning, a patient is moved incrementally through the gantry (along the axial direction). At each increment or "step", the X-ray source and detector rotate around the patient, capturing a series of projections at various angles. Data for a complete rotation may be collected for each axial position, or for just a portion of a rotation. After the whole or partial rotation, the patient is moved, and the process is repeated. Each whole or partial rotation produces data for one "slab" (containing one or more axial images, i.e. slices) of the body. After the projection data has been acquired in this way, typically each slice may be reconstructed using an image reconstruction algorithm such as filtered back projection (FBP). The sequence of slices may then be combined into a single 3D (volumetric) image of the overall imaging zone covered by the scan.

Sequential CT scanning may achieve higher image resolution compared with helical imaging. In addition, in some cases it may achieve a lower dose than helical imaging. In particular, for imaging cyclically moving anatomical structures, such as the heart, lungs, liver etc., it may be desired to obtain images of the structure only during a specific phase of the cyclical motion. In this event, a suitably gated sequential scanning operation can obtain the images at each gantry position with a lower dose compared with a helical scan.

Cone Beam Computed Tomography (CBCT) employs a divergent X-ray beam, e.g. shaped like a cone, allowing a single rotation to capture data spanning a volumetric cylinder, rather than only a single slice. This allows for faster imaging.

Cone beam imaging can employ both helical and step-and-shoot scan modes.

In a step-and-shoot mode, distinct volumetric projection datasets are acquired sequentially at each of a series of axial positions by moving the patient or source-detector system incrementally along the axial direction. By `volumetric projection dataset' is meant a projection dataset acquired across a 3D field of view and permitting reconstruction of a 3D volume, e.g. a disk or cylinder-like volume (often referred to as a `slab', sometimes also as a sub-volume).

The imaging procedure in this case may include the following steps. For each axial position of the patient relative to the source-detector system, the X-ray source and detector revolve around the patient, capturing a projection dataset at multiple angles. After data acquisition at the respective axial location, the source and detector are moved to a next axial position relative to the patient, and the process repeats. The scan data acquired at each axial position produces a projection dataset. With regards to image reconstruction, for cone beam data, the most common reconstruction algorithm is the Feldkamp-Davis-Kress (FDK) algorithm. This algorithm corrects the divergent nature of the X-ray beam in CBCT by rebinning the data into a parallel or fan-beam format, filtering the data along each rebinned detector row, then applying back-projection. Alternatively, iterative reconstruction methods can be used. These methods estimate the image and refine the reconstruction iteratively, offering potentially better image quality, lower noise, and reduced artifacts.

Since the projection data acquired at each axial acquisition position in the step-and-shoot process yields a dataset which is reconstructable into a respective sub-volume, these datasets need to be combined to produce a comprehensive view. This combination is called stitching.

Optionally, datasets are registered and aligned based on overlapping regions before stitching with the aim to ensure a smooth transition between datasets. Stitching algorithms may employ weighting functions to account for redundant data in the overlapping regions and reduce artifacts.

However, step artifacts in cardiac CT, particularly in step-and-shoot acquisition modes, can arise at the boundaries between stitched adjacent axial volumetric datasets.

For example, in cardiac CT imaging, one potential source of step artefacts is heart rate variability. If there is variability in the patient's heart rate between subsequent axial acquisitions, this may cause misalignment or inconsistency between adjacent datasets. Another potential source of step artefacts is respiratory motion: Even if patients are asked to hold their breath during scanning, there can be subtle variations in the position of the heart due to respiratory motion. If these shifts occur between two axial acquisitions, it can cause noticeable step artifacts at the stitching boundaries of the datasets. The visualization of the cardiac anatomy may hence show discontinuities which make it difficult to interpret the image volume and more specifically to assess the status of the coronary arteries. Even in cases where no explicit displacement is visible, a small discontinuity may be visible in the image which raises doubts that coronary artery lesions may be analyzed with sufficient accuracy. Thus, the interpretation of coronary artery lesions may be compromised at the border between sub-volumes of the step-and-shoot cardiac CT data sets.

One common method to address step artifacts involves using volumetrically overlapping sub-volumes and accounting for any small movements in the body part being scanned (in the "through-plane" direction). By acquiring sub-volumes that volumetrically overlap, there is more information available to correctly align the images.

For example, when there is a large overlap between neighboring sub-volumes, it is easier to perform accurate registration and minimize step artifacts because there is redundant information that can be used to match up the images correctly.

Proper registration improves image quality and makes it easier to use automatic quantitative (measuring) or functional analysis software. This is particularly important in applications such as for instance cardiac CT imaging, where accurate measurements and functional assessments are crucial.

Registration refers to the process of aligning and overlapping images in such a way that they form a continuous representation of the scanned area. It is a well-posed problem when there is sufficient overlap between neighboring sub-volumes because the registration algorithms have sufficient information to accurately align the reconstructed sub-volumes.

However, as the overlap between neighboring sub-volumes decreases, the problem becomes ill-posed in the sense that it is more difficult to find a solution that aligns the sub-volumes properly. In particular, there may be insufficient information to determine the exact position of each sub-volume relative to its neighbors.

Furthermore, when the body part being scanned moves in the direction perpendicular to the slice plane (through-plane), especially in different directions, it becomes very difficult or even impossible to find corresponding structures in adjacent sub-volumes to align them properly.

It would be advantageous to find a method for improving quality of registration of neighboring sub-volumes acquired in a step-and-shoot CT scanning operation in a way that does not impinge on the scanning protocol itself.

### SUMMARY OF THE INVENTION

The invention is defined by the claims.

According to examples in accordance with an aspect of the invention, there is provided a method for image reconstruction for application to data acquired in a step-and-shoot computed tomography (CT) scanning protocol applied for scanning an imaging zone of a CT imaging apparatus.

The method comprises: a) receiving a plurality of CT projection datasets, each corresponding to a different axial acquisition position along the step-and-shoot CT scanning protocol, and each comprising measurement data for a plurality of projections at different angular acquisition positions at a given fixed axial acquisition position, and each projection dataset providing data permitting image reconstruction of a respective sub-volume of the imaging zone.

The plurality of CT projection datasets includes at least a first projection dataset permitting image reconstruction of a first sub-volume of the imaging zone and a second projection dataset permitting image reconstruction of a second sub-volume of the imaging zone, wherein said first and second sub-volumes partially spatially overlap, e.g. at least in the axial direction, across an overlap volume.

In other words, the reconstructable sub-volumes corresponding to at least a first and second of the plurality of CT projection datasets partially spatially overlap (e.g. at least in the axial direction) across an overlap volume.

The method further comprises b) applying a data modification operation to the CT projection data to yield modified CT projection data, the modification operation comprising synthetically/virtually enlarging a projection field-of-view of at least one projection of at least one of the first and second projection datasets (e.g. in the axial direction) to thereby result in a modified overlap volume between the first and second projection datasets, wherein the modified overlap volume has a larger size than the overlap volume prior to the data modification operation. In other words, the data modification operation comprises synthetically/virtually enlarging a projection field-of-view of at least one projection of at least one of the first and second projection datasets (e.g. in the axial direction) to thereby increase a size of the overlap volume. For example, the synthetically/virtually enlarging a projection field of view may comprise augmenting/extrapolating the measurement data of at least one projection of at least one of the first and second projection datasets. This may for example be an augmentation/extrapolation in a spatial domain, e.g. in a detector pixel domain.

The method further comprises c) following the data modification operation, reconstructing at least the first and second CT projection datasets of the modified CT projection data to thereby yield at least a first and second CT volumetric image dataset corresponding respectively to the first and second sub-volume. The first and second CT volumetric image datasets thus are reconstructions of the modified versions of the first and/or second CT projection datasets. The modified versions might be referred to as extended first and/or second projection datasets.

The method further comprises d) registering at least the first and second CT volumetric image datasets to one another.

Embodiments of the invention provide a method aimed at reducing or eliminating step artefacts in reconstructed CT data acquired in a step-and-shoot imaging procedure (also known as sequential scanning). The proposed method is based on virtually enlarging a field of view (FOV) of projections acquired in the scan in advance of registering reconstructions of neighboring sub-volumes to one another. Another way of saying this is that the method involves enlarging or expanding at least a subset of the acquired projections, e.g. by synthetically adding additional rows and/or columns to the detector data for each relevant projection.

When the CT detector data is virtually enlarged in the direction of the system rotation axis, the overlap volume between adjacent sub-volumes increases and thus stability of registration is enhanced and resulting image quality (i.e., the image quality after stitching) improved.

In other words, the invention proposes synthetically/virtually augmenting or enlarging the detector data for each of at least a subset of the acquired projections in the direction of the system rotation axis (e.g. using row extrapolation) to increase a volume of overlap between neighboring axial sub-volumes. A projection means for example a set of x-ray detector data for pixels of the detector for a single x-ray beam projection of the source at a single axial and angular/rotational acquisition position of the CT scanning apparatus.

The data modification operation may in some embodiments comprise enlarging a projection field of view of a plurality of the projections of the at least one of the first and second projection datasets.

The data modification operation may in some embodiments comprise enlarging a projection field of view of all of the projections of the at least one of the first and second projection datasets.

In some embodiments, the data modification operation may comprise enlarging a projection field of view of at least one projection of both the first and second projection datasets, for example in an axial direction.

In some embodiments, the registering may be performed based only on image data in the modified overlap volume.

In some embodiments, the registering comprises constructing a registration mask. The registration mask may define at least a portion of the overlap volume. It may define the whole of the overlap volume. It may alternatively define a portion of the overlap volume. The registration may be performed based on only data identified by the registration mask.

In some embodiments, the method may comprise applying a quality assessment operation to the overlap volume between the at least first and second sub-volume, wherein the quality assessment operation is configured to identify one or more regions of the overlap volume which do not meet a pre-defined quality criterion. The method may comprise generating a registration mask, wherein the registration mask defines the volumetric region occupied by the overlap volume but excluding the identified volumetric regions which do not meet the quality criterion.

In some embodiments, the method may comprise determining a quality or reliability score for each voxel of at least a portion of the first and/or second volumetric image datasets (e.g. at least the voxels within the overlap volume), and wherein the registration mask is generated in such a way as to include only image data voxels for which the determined quality or reliability scores exceed a pre-defined threshold. In some embodiments, the method comprises, for each of at least a subset of voxel (of the first and/or second volumetric image dataset), determining what percentage of the projection data used to reconstruct the voxel is measured projection data, what percentage is projection data generated as part of the data modification procedure (e.g. extrapolated projection data), and computing a quality or reliability score for the voxel as a value equal to or proportional to the ratio of measured projection data to generated (e.g. extrapolated) projection data used to reconstruct the voxel.

This quality or reliability score may then be used to inform the generation of the registration mask in the manner discussed above.

In some embodiments, the step of synthetically/virtually enlarging a projection field-of-view of a given projection comprises applying data extrapolation to the measurement data of the projection.

In some embodiments each projection includes measurement data for detector elements of a 2D array of detector elements (otherwise known as detector pixels). The 2D array for example comprises rows and columns of detector elements. The data extrapolation for each projection may comprise extrapolating additional rows or columns to the projection, for example in the axial direction.

In some embodiments, the extrapolating additional rows or columns for a given projection comprises copying an axially outermost row or column of the projection, for example at least one of the outermost rows or columns in the axial direction. For example, this may comprise copying at least one of the outermost rows or columns of measurement data of the projection and adding it as a new row or column of the measurement data for the projection.

In some embodiments, the extrapolating additional rows or columns for a given projection is achieved based on extrapolation from measurement data of a different projection (of a same or different one of the plurality of projection datasets) acquired at a same angular/rotational acquisition position but an axially adjacent acquisition position. For example, this might be a projection acquired in an axially adjacent acquisition projection dataset at a same angular acquisition position.

In some embodiments, the extrapolating additional rows or columns may be achieved based on application of a trained artificial intelligence (AI) model. For example, a trained neural network may be employed which has been trained to generate an anatomically plausible extrapolation of the given projection data.

In some embodiments, the CT projection datasets comprise cone beam CT projection datasets. In other words, the sequential imaging procedure may be a cone beam step-and-shoot imaging procedure.

In some embodiments, the method may comprise performing steps b) to d) outlined above for each of a plurality of pairs of axially adjacent (first and second) CT projection datasets of the plurality of CT projection datasets corresponding to partially overlapping reconstructable sub-volumes.

In some embodiments, at least a subset of the CT projection datasets contain a representation of at least a region of a heart of the subject. In some embodiments, at least a subset of the CT projection datasets contain a representation of at least a region of a heart vessel and/or chamber of the subject.

Another aspect of the invention is a computer program product comprising machine-executable code configured, when run on a processor, to cause the processor to perform a method in accordance with any embodiment described in this document or defined in any claim.

Another aspect of the invention is a processing device comprising one or more processors configured to perform a method in accordance with any embodiment described in this document or defined in any claim.

For example, according to one aspect of the invention, there is provided a processing device comprising one or more processors configured to:
a) receive a plurality of CT projection datasets, each corresponding to a different axial acquisition position along a step-and-shoot CT scanning protocol applied for scanning an imaging zone of a CT imaging apparatus, and each comprising measurement data for a plurality of projections at different angular acquisition positions at a given fixed axial acquisition position, and each projection dataset providing data permitting reconstruction of a respective sub-volume of the imaging zone;
   wherein the plurality of CT projection datasets includes at least a first projection dataset permitting image reconstruction of a first sub-volume of the imaging zone and a second projection dataset permitting image reconstruction of a second sub-volume of the imaging zone, wherein said first and second sub-volumes partially spatially overlap across an overlap volume;
b) apply a data modification operation to the CT projection data to yield modified CT projection data, the modification operation comprising synthetically/virtually enlarging a projection field-of-view of at least one projection of at least one of the first and second projection datasets (e.g. in the axial direction) to thereby result in a modified overlap volume between the first and second projection datasets, wherein the modified overlap volume has a larger size than the overlap volume prior to the data modification operation;
c) following the data modification operation, reconstruct at least the first and second CT projection datasets of the modified projection data to thereby yield at least a first and second CT volumetric image dataset corresponding respectively to the first and second sub-volume; and
d) register at least the first and second CT volumetric image datasets to one another.

In some embodiments, the registration is performed based on only image data in the modified overlap region.

Another aspect of the invention is a system comprising: a processing device in accordance with any embodiments described in this document or in accordance with any claim, and further comprising a computed tomography (CT) acquisition apparatus operatively coupled with the processing device.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 outlines steps of an example method in accordance with one or more embodiments of the invention;
Fig. 2 is a block diagram of an example processing device and system in accordance with one or more embodiments of the invention;
Fig. 3 schematically illustrates an example CT imaging apparatus;
Fig. 4 schematically illustrates a single cone beam projection;
Fig. 5 schematically illustrates a projection dataset for a single axial step of a sequential CT imaging protocol;
Fig. 6 and Fig. 7 show 3D illustrations of a sub-volume reconstructed from a short scan reconstruction (Fig. 6) and a full scan reconstruction (Fig. 7);
Figs. 8a and 8b schematically illustrate respective sequences of axial sub-volumes acquired as part of respective sequential scanning protocols, wherein neighboring sub-volumes of each sequence overlap;
Figs. 9a and 9b schematically illustrate the regions of overlap between the neighboring sub-volumes of the example sequences of Fig. 8a and Fig. 8b;
Fig. 10 illustrates a step artefact at the boundary between two sub-volumes in a reconstructed sagittal image slice;
Fig. 11 schematically illustrates extrapolating additional rows or columns of an example projection;
Fig. 12 and Fig. 13 schematically illustrate the concept of expanding in an axial direction a field of view of an example projection in two axially neighboring projection datasets; and
Fig. 14 illustrates the comparative effect of applying an image reconstruction method according to embodiments of the invention in reducing step artefacts as compared with a standard image reconstruction method.

### DETAILED DESCRIPTION OF THE EMBODIMENTS

The invention will be described with reference to the Figures.

Embodiments of the invention provide an image reconstruction method for reducing step artefacts when reconstructing sequential CT projection data. The method is based on artificially augmenting or expanding the field of view in an axial direction of at least one projection of at least one projection dataset corresponding to one axial position of the sequential CT protocol. Accordingly, an overlap volume between a reconstruction (sub-volume) of the at least one projection dataset and an axially adjacent projection dataset is increased. This allows for more robust and accurate registration between the said overlapping sub-volumes. Accordingly, step artefacts in the stitched reconstructed volume comprising both adjacent sub-volumes are reduced.

As discussed previously, step artefacts can arise in CT images acquired using a sequential (step-and-shoot) acquisition protocol. Step artefacts can have different causes. The most dominant causes are cyclical biological motions, such as heart motion or respiratory motion, these leading to movement of the imaged anatomy between acquisition of two adjacent axial sub-volumes of the patient. In addition, cardiac arrhythmia, or patient voluntary motion can also cause artefacts.

Step artefacts result in a final 3D image which contains discontinuities in the visualization of the imaged anatomy. For example, when imaging the cardiac anatomy, discontinuities can arise in visualization of coronary arteries, making it difficult to interpret the image and also disrupting the functionality of automatic quantitative or functional analysis algorithms applied to the reconstructed image.

A known method to address such step artefacts is described in the following paper: Lebedev S, Fournie E, Stierstorfer K, Kachelrieß M: Stack transition artifact removal (STAR) for cardiac CT. Med Phys 46(11) 2019. 4777-91. In this paper, projection datasets corresponding to axially/longitudinally overlapping steps in a sequential scanning protocol are reconstructed. The reconstructed sub-volumes corresponding to neighboring steps partially overlap volumetrically. An image-based registration scheme is applied to the overlap region. A deformation vector field is subsequently derived, expanded to the entire volume, and used to correct for the step artefacts.

However, it is the recognition of the inventors that this method and similar such methods are only successful where the overlap volume between adjacent reconstructed sub-volumes is sufficiently large.

One way to expand the size of the overlap volume would be to increase a width of the x-ray beam and/or to expand a size of the x-ray detector array. However, such modifications require major hardware modifications to the CT acquisition apparatus. Another way to expand the size of the overlap volume would be to make the axial steps of the acquisition protocol closer together axially. However, this would increase a time taken for a scan because more axial steps would be required to cover the desired imaging zone.

It is the recognition of the inventors that, for purposes simply of improving image registration, a significant improvement in this regard can be achieved without changing the real physical width of each projection or making the steps closer. Instead, a synthetic or virtual enlargement of the acquired projection data field-of-view at each step can be performed (e.g. at least partly in the axial direction), to thereby increase a size of overlap between the resultant reconstructed sub-volumes corresponding to each step. If the synthetic enlargement is done in a way that is faithful to the general alignment of the anatomy depicted at the boundaries of each true projection field-of-view, then a similar improvement in registration between adjacent sub-volumes can be achieved as if a real expansion of the projection field of view has been achieved.

Thus, a method is proposed herein to reduce (or even remove) step artefacts from CT data sets acquired using step-and-shoot scanning by employing a reconstruction method which performs a virtual enlargement of the projection data field-of-view in combination with an image-based registration using the expanded data.

In accordance with one set of embodiments, the method utilizes reconstruction of a complete image volume available in sequential cone beam CT (e.g. circular cone beam CT). When the cone beam CT detector is virtually enlarged in the direction of the system rotation axis (e.g. through row extrapolation) the overlap area increases and thus the registration is further stabilized and improved in quality.

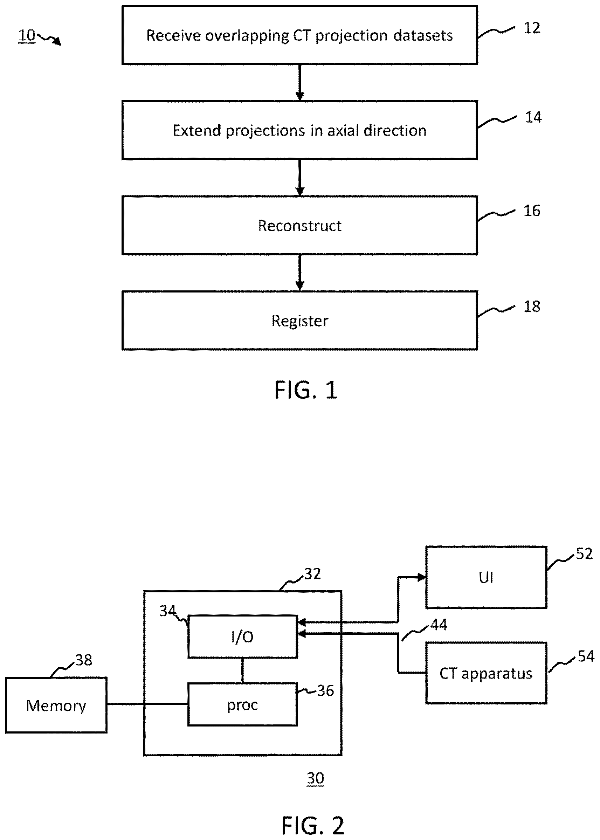

Fig. 1 outlines in block diagram form steps of an example method according to one or more embodiments. The steps will be recited in summary, before being explained further in the form of example embodiments.

A method 10 is provided for image reconstruction for application to projection data acquired in a step-and-shoot (otherwise known as 'sequential') CT scanning protocol, the data spanning an imaging zone of a CT imaging apparatus. The imaging zone for example is a 3D tubular region in space, e.g. a 3D cylindrical region or approximately cylindrical region. The imaging zone is a region around which the diametrically opposing x-ray source and x-ray detector rotate to capture projections at different angular positions and along which the x-ray source and x-ray detector are axially translatable to capture projections at different axial positions.

The method comprises receiving 12 a plurality of CT projection datasets, each corresponding to a different axial acquisition position along the step-and-shoot CT scanning protocol, and each comprising measurement data for a plurality of projections at different angular acquisition positions at a given axial acquisition position, and each projection dataset providing data permitting reconstruction of a respective sub-volume of the imaging zone.

The step-and-shoot CT scanning protocol comprises acquiring projections at a range of angles around the imaging zone at each of a series of axial step positions, and each of the plurality of CT projection datasets corresponds to projection data for one of the axial steps of the sequential scanning protocol. The data acquired at each axial step can be understood as spanning a 3D field of view, for example having an approximate shape of a disk or slab in the sense that the divergent (e.g. cone) x-ray beam when swept around the range of angles at a given axial position along the sequential scanning protocol sweeps out a 3D shape in space. In this sense, each projection dataset might be referred to as a volumetric projection dataset. Furthermore, each projection dataset permits reconstruction of a 3D sub-volume of the overall 3D imaging zone. Since each projection dataset corresponds to a particular axial acquisition position of the step-and-shoot scanning protocol, the projection datasets might be referred to as axial projection datasets.

Each acquired projection may include measurement data for detector elements of an array of detector elements (otherwise known as detector pixels). The array may be a 2D array in some examples. The 2D array for example comprises rows and columns of detector elements. In some examples, one dimension of the 2D array extends in an axial direction/dimension of the imaging apparatus and a second dimension of the array extends in a rotational/angular direction/dimension of the imaging apparatus. For example, columns of the array may extend in one of the axial or angular direction of the imaging apparatus, and rows may extend in the other of the axial and angular directions.

The reconstructable sub-volumes of at least a first and second of the received plurality of CT projection datasets overlap partially across a respective overlap volume. A corollary of this is that the total 3D field of view swept out by the x-ray beam in acquiring the first projection dataset at a first axial position overlaps with the total 3D field of view swept out by the x-ray beam in acquiring the second projection dataset at a second axial position. The first and second CT projection datasets for example correspond to neighboring axial acquisition positions along the step-and-shoot CT scanning protocol.

The method further comprises applying a data modification operation comprising synthetically/virtually enlarging or expanding or widening or augmenting 14 a projection field-of-view of at least one projection of at least one of the first and second projection datasets in at least one dimension, for example in the axial direction, to thereby increase a size of the overlap volume. Synthetically/virtually enlarging a projection field of view of a projection dataset means for example enlarging the reconstructable sub-volume of a projection dataset in at least one dimension, for example in an axial dimension of the imaging apparatus. The data modification operation may in some embodiments comprise enlarging a projection field of view of a plurality of the projections of the at least one of the first and second projection datasets. The data modification operation may in some embodiments comprise enlarging a projection field of view of all of the projections of the at least one of the first and second projection datasets.

In some embodiments, the data modification operation may comprise enlarging a projection field of at least one projection of both the first and second projection datasets, for example in an axial direction.

The method 10 further comprises, following the data modification operation, reconstructing 16 at least the first and second CT projection datasets of the plurality of CT projection datasets to thereby yield at least a first and second CT volumetric image dataset. The first and second CT volumetric image datasets correspond to or represent a first and second sub-volume of the imaging zone. In other words, the first CT volumetric image dataset provides 3D image data representing a first sub-volume of the imaging zone and the second CT volumetric image dataset provides 3D image data representing a second sub-volume of the imaging zone. The first and second sub-volumes overlap across an overlap volume. In view of the data modification operation performed previously, the modified overlap volume between the first and second reconstructed volumetric datasets (i.e. the overlap volume between the projection datasets after the data modification operation) is larger than the original overlap volume between the reconstructable volumes of the original versions of the first and second projection datasets. In this sense, the modified overlap volume between the reconstructed first and second image datasets (after the data modification operation) might be understood as an expanded overlap volume.

The method further comprises registering 18 at least the first and second CT volumetric image datasets (i.e. the reconstructed first and second sub-volumes) to one another.

The thus registered first and second volumetric image datasets have a larger overlap than if the data modification operation had not been applied. As a result, the registration is more accurate and robust. Consequently, the resulting composite 3D image formed from the aligned combination of at least the first and second volumetric image datasets can be expected to have reduced or eliminated step artefacts.

The method may further comprise a step of forming a composite 3D image from the registered at least first and second sub-volume. For example, this may comprise a stitching operation to stitch together the at least first and second volumetric image datasets into a single composite image.

In some embodiments, the CT projection datasets comprise cone beam CT projection datasets.

In some embodiments, at least a subset of the CT projection datasets contain a representation of at least a region of a heart of the subject. In other words, the received CT data may be cardiac CT data.

Although the above-outlined steps refer to modification (axial extension) and registration of the CT data associated with just two axially adjacent steps of the imaging protocol, it will be recognized that the same steps can be applied to the CT data of a plurality different adjacent steps of the imaging protocol, for example the CT data of all axially neighboring positions of the imaging protocol.

In other words, the method may comprise performing steps 14 to 18 for each of a plurality of pairs of axially adjacent (axially neighboring) CT projection datasets of the plurality of CT projection datasets corresponding to partially overlapping reconstructable sub-volumes. For example, the method may comprise performing steps 14 to 18 for all pairs of axially adjacent (axially neighboring) CT projection datasets of the plurality of CT volumetric projection datasets corresponding to partially overlapping reconstructable sub-volumes.

The method may comprise reconstructing a composite 3D image by registering each neighboring pair of sub-volumes and subsequently stitching all neighboring sub-volumes together using a stitching operation.

As noted above, the method can also be embodied in hardware form, for example in the form of a processing device which is configured to carry out a method in accordance with any example or embodiment described in this document, or in accordance with any claim of this application.

To further aid understanding, Fig. 2 presents a schematic representation of an example processing device 32 configured to execute a method in accordance with one or more embodiments of the invention. The processing device is shown in the context of a system 30 which comprises the processing device. The processing device alone represents an aspect of the invention. The system 30 is another aspect of the invention. The provided system does not need to comprise all the illustrated hardware components; it may comprise only a subset of them.

The processing device 32 comprises one or more processors 36 configured to perform a method in accordance with that outlined above, or in accordance with any embodiment described in this document or any claim of this application. In the illustrated example, the processing device further comprises an input/output 34 or communication interface.

In the illustrated example of Fig. 2, the system 30 further comprises a user interface 52. This feature is optional.

In the illustrated example of Fig. 2, the system 30 further comprises a computed tomography (CT) imaging apparatus 54 for acquiring CT imaging data 44. For example, this may be a cone beam CT imaging apparatus in some embodiments.

The system 30 may further comprise a memory 38 for storing computer program code (i.e. computer-executable code) which is configured for causing the one or more processors 36 of the processing device 32 to perform the method as outlined above, or in accordance with any embodiment described in this disclosure, or in accordance with any claim.

As mentioned previously, the invention can also be embodied in software form. Thus another aspect of the invention is a computer program product comprising computer program code configured, when run on a processor, to cause the processor to perform a method in accordance with any example or embodiment of the invention described in this document, or in accordance with any claim of this patent application.

To aid in understanding of the principles of the invention, there will now be briefly discussed an example CT imaging apparatus and step-and-shoot CT imaging protocol suitable for utilization with embodiments of the present application.

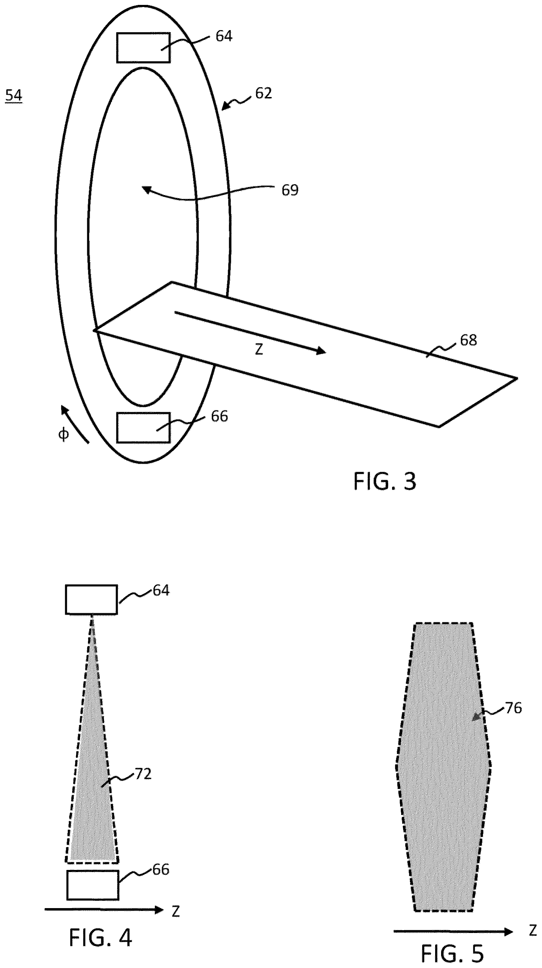

Fig. 3 shows a schematic representation of a CT imaging apparatus 54. The CT imaging apparatus comprises a rotatable gantry 62 housing an x-ray source 64 (e.g. an x-ray tube), and an x-ray detector 66. The x-ray detector may be a 2D x-ray detector. The CT imaging apparatus 54 further comprises a patient table 68 which is moveable in an axial direction, z, relative to the gantry. With a patient disposed on the table 68, an x-ray beam emitted from the source 64 traverses an imaging zone 69 around which the gantry extends, is attenuated by the tissue of the patient and is detected at the detector 66.

In a sequential cone beam CT acquisition method (step-and-shoot method), the patient or object remains stationary while the x-ray source 64 and detector 66 rotate around the patient (in an azimuthal, ϕ, direction) to acquire data for a specific axial position. This results in a circular (or partial circular, called short-scan) trajectory cone beam scan. The system then moves (or `steps') to the next axial position, by changing a relative axial, z, position between the table 68 and the gantry 62 (usually by moving the table) and another acquisition is performed. This sequence continues until all required axial positions are scanned. In some embodiments, the gantry is tilted, i.e., the patient table moves in a direction different from the rotation axis of the system.

Accordingly, there is acquired one projection per [φ, z] position of the system. The measurement (i.e. projection) data acquired for one projection comprises pixel data for each detector pixel, p, for one [φ, z] position. In the case of spectral CT imaging, the measurement (i.e. projection) data acquired for one projection comprises pixel data for each of a plurality of energy levels or bins, n, for each detector pixel, p, for one [φ, z] position.

Fig. 4 schematically illustrates a single cone beam projection at a single rotation position of the source 64 and detector 66 system, and at a single axial, z, position of the scanner. Each projection has a projection field-of-view 72, by which is meant a (volumetric) region spanned by the x-ray beam (e.g. cone beam) when acquiring a single projection.

Fig. 5 schematically illustrates a cross-section or side view of complete set of the cone-beam projection data (for a whole rotation or part of a rotation) for a single axial position along a step-and-shoot scanning protocol. In other words, this represents the overall field of view which is swept out by the projection beams of all the projections acquired for the projection dataset. It can be seen that the set of data covers a disk-like volumetric region 76 (referred to herein as a sub-volume) which may be cone-like at each end. This region represents a sub-volume of the overall imaging zone which is reconstructable from the projection data. The sub-volume spans a volumetric region 76 which is formed by the combination of the projection fields of view 72 of the individual projections at the different angular positions around the imaging zone. It is noted that, in the general case, axial projections can be acquired at a slant angle, i.e. with the gantry tilted at an angle, and thus the projection sub-volume of Fig. 5 may in some cases be tilted at an angle.

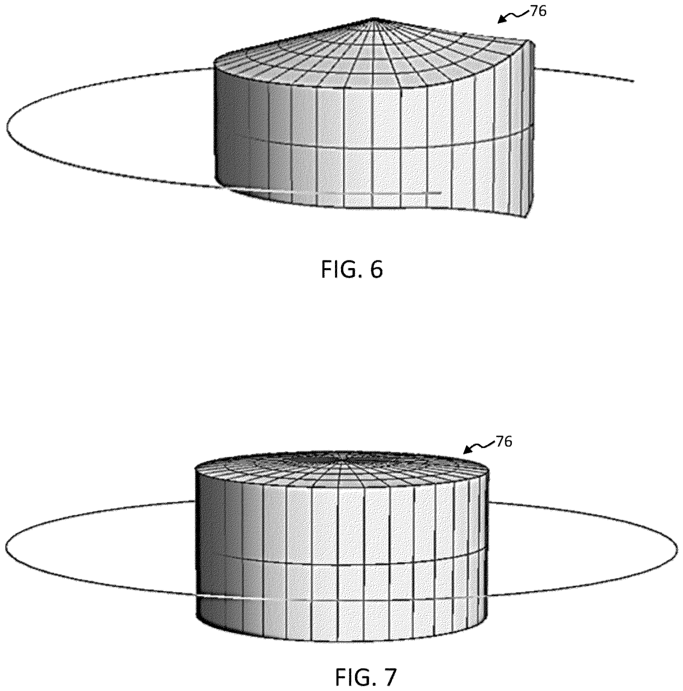

By way of further illustration, Fig. 6 and Fig. 7 each show a 3D illustration of an example sub-volume which may be reconstructed from a projection dataset for a single axial position along an example step-and-shoot scanning protocol. Fig. 6 shows a 3D illustration of the sub-volume that can be reconstructed from an axial short scan (containing the volume that is within the beam over the entire short scan range). A short scan reconstruction uses projection data spanning e.g.180° plus fan-angle of the angular acquisition positions. Fig. 7 shows a 3D illustration of the sub-volume that can be reconstructed from an axial full scan (containing the volume that is within the beam over 180° or more, e.g. over a full 360° after parallel rebinning). It is to be noted that, in both cases, the top surface is not flat, instead defining a cone-like projection region. The overlap between these cone-like projection regions of axially neighboring acquired volumes may at least partially form the previously discussed overlap volume.

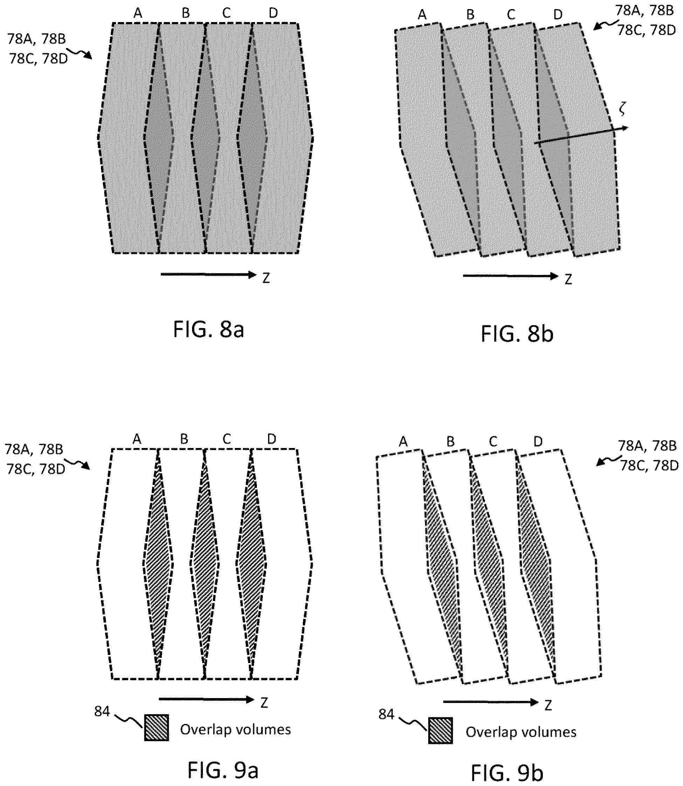

For example, Fig. 8a schematically illustrates the reconstructable sub-volumes covered by an example sequence of axial projection datasets A, B, C and D, each corresponding to a different axial location along a sequential CT imaging procedure. The four reconstructable sub-volumes are labelled 78A, 78B, 78C, 78D in Fig. 8a.

The regions of overlap 84 between the sub-volumes are indicated in Fig. 9a. These may be referred to as overlap volumes 84.

As noted above, in the general case, axial projections can be acquired at a slant angle, i.e. with the gantry tilted at an angle. Embodiments of the invention are applicable also in these cases. An example is illustrated by Fig. 8b and Fig. 9b. For example, Fig. 8b schematically illustrates the reconstructable sub-volumes covered by an example sequence of axial projection datasets A, B, C and D, each corresponding to a different axial location along a sequential CT imaging procedure for which, at each axial location, the gantry is tilted at an angle, resulting in an axis of rotation tilted at angle ζ. Fig. 9b illustrates the regions of overlap 84 between the sub-volumes of Fig. 8b, i.e. the overlap volumes 84.

For each acquired axial projections dataset, a respective volumetric image may be reconstructed spanning the sub-volume 78 covered by the projection data. This may for example take the form of a cylindrical volume image dataset (or near cylindrical, e.g. cylindrical with cone-like regions at each end) for each axial position. For cone beam projection data, reconstruction of each axial volumetric image may be performed using an appropriate reconstruction algorithm, for example the Feldkamp-Davis-Kress (FDK) algorithm or other algorithm suitable for cone-beam geometry. The result of the image reconstruction process is then a sequence of individual volumetric images, each corresponding to a respective sub-volume (e.g. cylindrical image volumes or cylindrical with approximately cone-shaped endings), i.e. corresponding to respective one of the axial positions of the step-and-shoot scan sequence. Due to the overlap in the sub-volumes covered by the projection datasets, there is a resultant overlap between axially neighboring volumetric images. The regions of overlap between the reconstructed volumetric images correspond spatially to the overlap volumes between the sub-volumes shown in Fig. 9.

The set of reconstructed axial image sub-volumes 78A, 78B, 78C, 78D may then be composited into a unitary volumetric image representative of the complete imaging zone across which the sequence of axial acquisitions span.

The process of compositing the set of axial volumetric images into a single image is sometimes known as 'stitching'.

Prior to stitching, there may be first performed a step of registering axially neighboring axial image volumes to one another. Registration may for example be based on inherent features in the image (feature-based registration) or intensity values (intensity-based registration) to find an optimal transformation (translation, rotation, deformable, etc.) that aligns adjacent sub-volumes.

Once the axial volumes are registered to one another, they may be stitched or fused together to create a single continuous volume. To achieve this, the overlap volumes 84 between adjacent sub-volumes 78 require special consideration. There are several methods to handle the overlapping regions.

One simple approach is to have a linear boundary part way (in z-direction) along the overlap region 84. To achieve this, one common approach is to select voxels from the sub-volume based on the proximity of the position of the imaging source relative to the voxel in the z (or alternatively, in the case of gantry tilt, in *ζ*) direction. In particular, for each voxel in the overlap volume, the value from the volume with the source position closest to the z-position of the voxel is chosen.

To mitigate the impact of noise, an alternative approach is to average voxel values in the overlapping regions. By doing this, fluctuations in voxel values (often caused by noise) from the two overlapping sub-volumes are reduced, leading to a noise-reduced and potentially more accurate composite image. This approach, however, assumes that the two sub-volumes being averaged are inherently consistent in the overlap volume (e.g. properly registered, or without major motion of the anatomy between acquisition of the two sub-volumes).

Another common technique is weighted blending. In this method, rather than using an abrupt transition between two overlapping sub-volumes, a smooth transition is created. The sub-volumes are blended using a weighting factor that gradually changes from 1 to 0 towards the end of one sub-volume in the z-direction, while inversely transitioning from 0 to 1 for the adjacent sub-volume. This ensures that at the center of the overlapping region, both sub-volumes contribute equally to the resultant composite image, while towards the edges, the contribution of one sub-volume diminishes and the other dominates. Although this method can reduce visible artifacts in the overlap region, it can slightly compromise image sharpness due to the blending.

In some cases, combinations of these methods might also be used.

The final composite volume can be visualized using various image rendering techniques, including, by way of non-limiting example, multiplanar reformatting (MPR), maximum intensity projections (MIP), or 3D volume rendering.

As discussed previously, in any of these example approaches, an important step is registration of neighboring volumetric image datasets representative of the neighboring sub-volumes 78 prior to the stitching.

Due to the fact that the final composite image volume is formed by stitching together reconstructed images of sub-volumes acquired at different times, image artefacts can arise at the boundaries between stitched sub-volume images, for example due to movement of the anatomy between the two acquisitions.

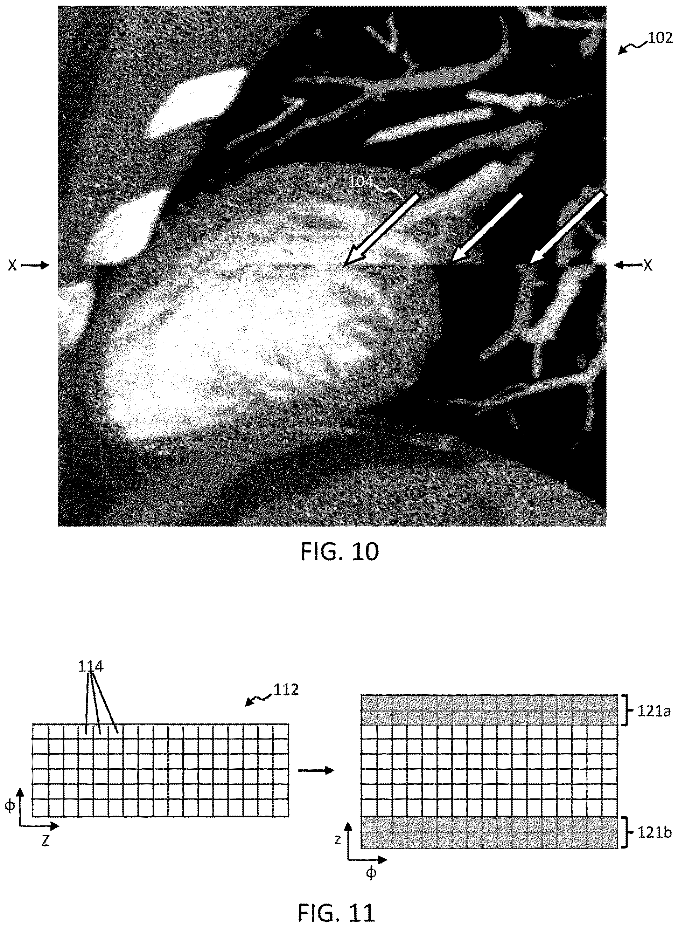

An example of a step artefact is illustrated in Fig. 10. This illustrates a first image 102 generated using image data of two neighboring sub-volumes. The image visualizes a cardiac region of a patient. The boundary between the two sub-volumes is illustrated at line X. At the location of the boundary, there is a discontinuity (indicated by arrows 104) in the representation of the imaged anatomy. This makes it difficult for a clinician to accurately interpret the anatomy visualized in the image.

Embodiments of the present invention propose a method to reduce or eliminate such step artefacts.

As discussed previously, embodiments of the invention include a step of applying a data modification operation comprising synthetically/virtually enlarging a projection field-of-view of at least one projection of at least one of an overlapping first and second projection datasets in the axial direction to thereby increase a size of the overlap volume 84.

In practice, enlarging a projection field of view of a projection may comprise expanding the row/column detector data acquired for the projection in the row and/or column direction. For example, as will be understood by the skilled person, for each projection, measurement data may be data acquired by an x-ray detector array, for example a 2D detector array (comprising a 2D array of detector elements/pixels), where the measurement data includes measurement data for each detector element/pixel. This detector data for a single projection might be referred to as a detector image or projection image or simply as a projection. Expanding the field of view of a projection may thus be achieved by augmenting or expanding the detector image or projection image in at least one of the row and/or column direction.

This is illustrated schematically in Fig. 11 which illustrates detector data for an example projection 112 comprising measurement data for a 2D array of pixels 114 of the x-ray detector. This might be referred to as a projection image 112. It is proposed to apply a data modification operation which has the effect of enlarging the projection field of view of the projection by expanding the projection image in the axial direction, z, of the CT imaging system. As illustrated, the resultant expanded projection includes one or more extension regions 121a, 121b which extend beyond the original width of the projection field of view in the axial, z, direction. The extension regions may be formed by adding additional rows/columns of data to the projection (or projection image) which span or occupy those regions. Thus, the expanded projection after applying the data modification operation may comprise additional data compared to the original projection. In other words, extra synthetic or virtual rows or columns of detector / measurement data may be added to the projection on at least one side to thereby artificially extend a projection field of view of the projection which the projection measurement data represents.

There are different ways to achieve the expansion of the projection field of view.

According to one or more embodiments, the synthetically/virtually enlarging a projection field-of-view of a given projection comprises or consists of applying data extrapolation to the (measurement data of the) projection.

For example, according to one or more embodiments, each projection may include measurement data for detector elements 114 of a 2D array of detector elements, the 2D array comprising rows and columns of detector elements, wherein the data extrapolation for each projection comprises extrapolating additional rows or columns to the projection in the axial (z) direction. This approach is illustrated in Fig. 11 which shows extrapolation of additional rows to the projection measurement data. The additional rows in the example of Fig. 11 are added on each axial (z) side of the projection image, thereby adding expansion regions 121a, 121b, each comprising one or more additional rows added to the projection.

There are different ways of achieving the row and/or column extrapolation.

One approach is simply to copy the measurement data of at least one outermost row or column of the projection measurement data, for example at least one of the axially outermost rows of columns. This may comprise for example copying at least one of the outermost rows or columns of measurement data of the projection. and adding it as a new row or column of the measurement data for the projection.

If the projection is extended on both sides as illustrated in Fig. 11, e.g. extended in the axial (z) direction on both sides, the outermost rows or column on each relevant respective side (e.g. the side in the axial direction in the example of Fig. 11) may be copied and added as a new row or column to the measurement data for the projection. If more than one new row or column is to be added then optionally the same outermost row or column in the relevant side is simply copied more than one time. For example, in Fig. 11, the axially outermost row on one side (e.g. the top side) may be copied twice to achieve two new rows and the axially outermost row on the other side (e.g. the bottom side) may be copied twice to achieve two new rows.

Another way of extrapolating additional rows or columns for a given projection is to perform extrapolation from measurement data of a different projection acquired at a same angular position but an axially adjacent position (i.e. from an axially adjacent projection dataset). A smooth morphing process may be applied to improve integration of the measurement data from the neighboring axial position to the relevant projection. The smooth morphing process is aimed at ensuring that there is a smooth transition from the measured data to the extrapolated data. This might be achieved, e.g., by re-scaling the extrapolated data such that the first extrapolated row/column has the same mean value as the last measured row/column.

Another way of extrapolating additional rows or columns for a given projection is to use a trained artificial intelligence (AI) model, e.g. a trained artificial neural network, to perform the extrapolation. Here the idea is to use a neural network which has been trained to generate an anatomically plausible extrapolation of a given input projection data set.

One example way of generating a suitable AI model will now be outlined. According to this example, a convolutional neural network (CNN) is trained to extrapolate measured projection data above and below the first and last detector row, leading to an anatomically plausible extension of the coverage of the first pass image. It is proposed in accordance with this example to employ a 2D or 2.5D CNN operating on one or several projection views. For example, the 2D convolution filters may act along the row or column dimensions of the projection data to which the model is applied. For training the neural network, it is possible to use measured or simulated projection data from axial scans (either unfiltered data in native geometry or parallel projections that may be ramp-filtered data). Radom patches with 2*N rows may be drawn from the projection data (e.g. N=128); the first N rows are used as input to the network, while the last N rows are used as the target to be predicted by the CNN (i.e. the ground truth). In other to efficiently learn the typical appearance of an anatomical structure in projection space, typically the optimal approach would be to train a separate neural network for each anatomical structure which may be the subject of the scan images, e.g. heart, or skull etc. During inference (i.e. when applying the method in operation), the neural network would be applied to the last N measured rows of the detector data for a given projection, and the output of the network would be N extrapolated rows which can simply be appended to the measured dataset.

Various types of CNN architectures would be suitable. One example is to use a generative adversarial network (GAN) with a generator network trained to predict the extrapolated rows and a discriminator network trained to distinguish the outcome of the generator network from the ground truth projection data. By simultaneously training both networks, the generator will tend towards predicted extrapolations which are indistinguishable from the ground truth data for the discriminator.

If applying a 2.5D approach, it is proposed to use a network which is trained to predict a single projection view from a set of M input projection views. The input data can be chosen in a way which is optimal for the particular case of projection data, e.g. by including pairs of angularly opposite views (i.e. projections differing by 180°) in the input.

In order to enlarge the size of the overlap volume 84, the method may comprise applying the virtual FOV expansion using any of the methods mentioned above to each projection of a given projection dataset, i.e. to each different angular projection for a given axial step. This may be done for at least one of a pair of axially neighboring projection datasets.

In some embodiments, the virtual FOV expansion, e.g. the row/column extrapolation may be separately applied to the projection data of each axial step of the scan.

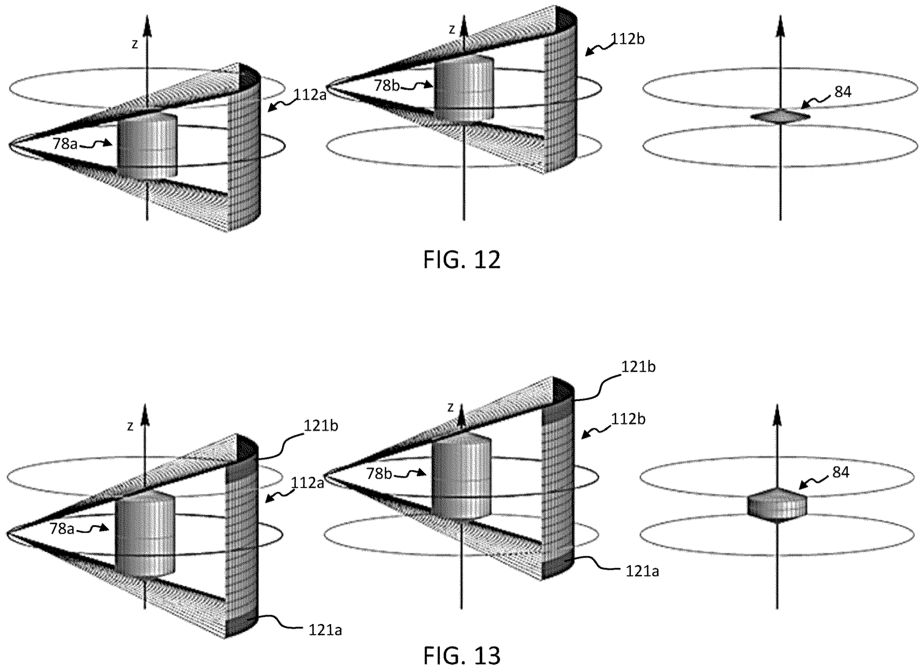

Fig. 12 schematically illustrates an example projection 112 acquired at a same angular position in each of a first (Fig. 12 left) and second (Fig. 12 right) axially (z) neighboring and volumetrically overlapping projection datasets without any data modification operation performed to expand the overlap region between the two. Fig. 12 schematically illustrates the axial extent of the reconstructable volumes 78a, 78b reconstructable from the first and second axially neighboring projection dataset. The overlap volume 84 between the reconstructable volumes of the two projection datasets is illustrated in Fig. 12 (right).

Fig. 13 shows schematically illustrates an example projection 112 acquired at a same angular position in each of a first (Fig. 13 left) and second (Fig. 13 right) axially (z) neighboring and volumetrically overlapping projection datasets after application of a data modification operation in accordance with one or more embodiments of the present invention, for expanding the overlap volume between the two. Fig. 13 schematically illustrates the axial extent of the reconstructable sub-volumes 78a, 78b reconstructable from the first and second axially neighboring projection datasets after expanding the projection field of view of each projection dataset. The overlap volume 84 between the reconstructable sub-volumes of the two projection datasets is illustrated in Fig. 13 (right). In this example, the data modification operation comprises adding additional rows/columns to each axial end of the measurement data of each projection (i.e. to the projection image). These additional rows/columns add extension regions 121a, 121b at each axial end of each projection image. It can be seen that the resulting modified overlap volume 84 between the reconstructable sub-volumes of the two neighboring projection datasets is expanded compared to the initial overlap volume achieved in the example of Fig. 12.

As discussed previously, after applying the data modification operation to expand the projection field of view, image registration is performed between the at least first and second reconstructed volumetric images (i.e. the reconstructed first and second sub-volumes).

To this end, in some embodiments, the registering comprises constructing a registration mask, the registration mask defining at least a portion of the overlap volume. This may be the whole of the overlap volume or just a portion of it.

In some embodiments, the registering is performed based only on image data in the overlap volume.

To this end, in some embodiments, if a registration mask is generated, the registration is based on only data identified by the registration mask.

While FOV expansion enlarges the overlap region, some of the image structures in the enlarged part may not reflect/represent real anatomy. Optionally, in some embodiments, the registration mask may be generated in such a way as at least partially exclude one or more regions containing image data detected as being non-anatomical or of low quality. The regions may be detected by, e.g., comparing voxel intensities in adjacent sub-volumes of the reconstructed volume in combination with an appropriate region segmentation. Thus, in some embodiments, the method may comprise applying a quality assessment operation to the overlap volume between the at least first and second reconstructed volumetric images (i.e. reconstructed first and second sub-volumes), wherein the quality assessment operation is configured to identify one or more volumetric regions of the overlap volume which do not meet a pre-defined quality criterion. The method may comprise generating a registration mask, wherein the registration mask defines the volumetric region occupied by the overlap volume but excluding the identified volumetric regions which do not meet the quality criterion.

The quality assessment operation may comprise an anatomical plausibility algorithm adapted to determine regions which are not anatomically plausible.

Alternatively, the quality assessment algorithm may be adapted to compare a voxel intensity of each voxel included in the overlap region between the first and second neighboring image sub-volumes. The quality criterion may be applied to each voxel and may comprise checking whether a voxel intensity in the first of the axially neighboring volumetric images is within a pre-defined intensity range of the voxel intensity of the spatially corresponding/coincident voxel in the second of the axially neighboring volumetric images.

In some embodiments, the mask may be restricted to image regions which were reconstructed with a certain minimum quantity of measured (as opposed to extrapolated) projection data.

This may be explained as follows, considering the case of reconstruction being performed using filtered back projection (e.g. Feldkamp-Davis-Kress back projection). Considering a single voxel in a sub-volume, this is reconstructed by back projecting a certain filtered projection value from each projection with a certain weight. For some voxels, it may be possible to reconstruct the voxel using exclusively measured projection data, for example where the voxel is located toward a center of the imaging zone. This voxel can consequently be reconstructed with relative high quality. For a further subset of voxels, due to the voxel positions, it may be necessary to reconstruct the voxels using entirely extrapolated projection data. These voxels, when reconstructed, will be of relative poorer quality. Further to the above two cases, there are also voxels positioned in a transition area, which are reconstructed partially from measured projection data and partially from extrapolated data.

It is possible to assign a quality/reliability score or value to each reconstructed voxel, for example as a function of the fraction or ratio of measured to extrapolated data used to reconstruct the voxel. In other words, for each voxel, it is proposed to determine, when reconstructing the voxel, what percentage of the data used to reconstruct the voxel is measured data, what percentage is extrapolated data, and compute a quality or reliability score for the voxel as a value equal to or proportional to the ratio of measured data to extrapolated data used to reconstruct the voxel. It is noted that, of course, reconstruction of a particular single voxel of image data utilizes multiple data points of projection data, typically from multiple different projections. Thus by `data used to reconstruct a voxel' is meant the set of projection datapoints which are used in the process of reconstructing a particular image-data voxel.

Once the quality or reliability score is determined for each voxel of each of the first and second reconstructed sub-volumes (the first and second volumetric image datasets), then it is possible to use this information when determining the registration mask such that the registration mask defines/includes only image data voxels which have a quality/reliability score above a certain pre-defined threshold, e.g. which were reconstructed using a ratio of measured to extrapolated projection data which exceeds a pre-defined threshold.

Example implementation details relating to the registration will now be discussed.

Let *A* and *B* be two sub-volumes 78 corresponding to adjacent steps of the imaging protocol, and let O be a registration mask defined in the image domain and defining the overlap volume 84 between the two sub-volumes (or a modified form of the overlap volume, e.g. using a method discussed above).

The registration may comprise registering *A* and *B* based on *O. O* is for example used to restrict the computed displacements for the registration to the overlap region. Preferably this may be done by modifying the active component of the registration algorithm (often called the force (vector field)) in such a way that positions outside of the registration mask cannot contribute to the active component. The registration results in a deformation vector field (DVF).

The registration may further comprise applying the DVF to *A* and/or *B.*

In some embodiments, *A* and *B* may be defined on the entire FOV. For a total number of two steps, *A* may be defined so as to contain the image information from one step and *B* from the other. For a total number of more than two steps, *A* and *B* may be defined such that the image information from every second step may be contained in one image, e.g. *A*, and the image information from the remaining steps may be contained in the other image, e.g. *B.*

In some further embodiments, the step transitions may be handled independently from each other, i.e., *A* and *B* may be defined on a region of interest (ROI) around a certain overlap region. Following the processing of all step transitions, a joint DVF may be constructed by inserting the DVFs obtained for each step transition and interpolating or extrapolating the displacements for the remaining voxel positions. In other words, each neighboring pair of reconstructed sub-volumes may be handled separately, wherein a respective DVF is generated for each neighboring pair of reconstructed sub-volumes and subsequently a joint DVF may be constructed by combining the whole set of DVFs.

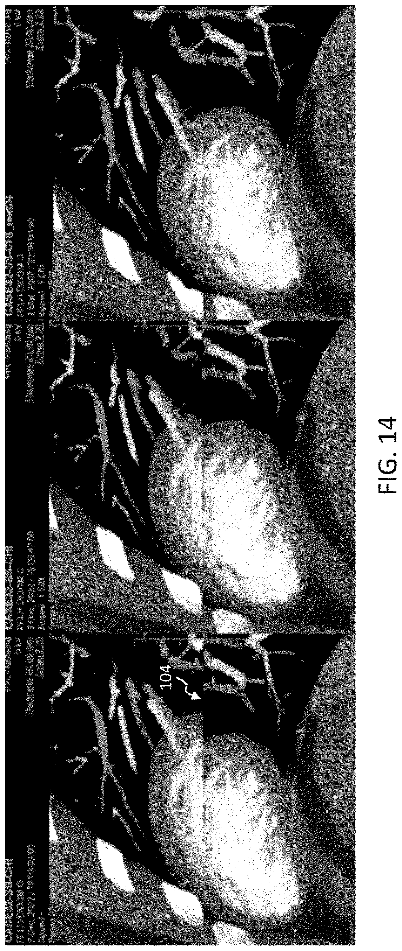

Fig. 14 illustrates the results of application of a method according to embodiments of the present invention in reducing an example step artefact.

Fig. 14 (left) shows a slice extracted from a reconstructed volumetric image generated using a standard reconstruction method without the registration step. The volumetric image covers a cardiac region of a patient. The image has a clear step artefact at the location indicated by arrow 104.

Fig. 14 (center) shows a slice from an example volumetric image generated using a method in which a neighboring first and second axial sub-volume are registered based only on image data falling within an overlap volume, but without expanding the size of the overlap volume (i.e. not in accordance with the invention). It can be seen that the step artefact is reduced partially.

Fig. 14 (right) shows a slice from an example volumetric image generated using a reconstruction and registration method in accordance with an embodiment of the invention in which the overlap region is expanded prior to registration. It can be seen that the step artefact is significantly reduced.

Embodiments of the present invention may be advantageously applied for reconstruction of any type of CT image data.

One example application is for cardiac CT imaging. For example, a common problem which may occur in cardiac CT imaging is the presence of step artefacts along the path of a cardiac artery. This can impact the inability of a clinician or automated algorithm to determine whether there is a lesion or stenosis at the position where the step occurs. Embodiments of the present invention help to reduce or eliminate such artefacts, resulting in improved visualization of cardiac arteries such as the coronary artery, thus improving clinical analysis results.

Embodiments of the invention described above employ a processing device. The processing device may in general comprise a single processor or a plurality of processors. It may be located in a single containing device, structure or unit, or it may be distributed between a plurality of different devices, structures or units. Reference therefore to the processing device being adapted or configured to perform a particular step or task may correspond to that step or task being performed by any one or more of a plurality of processing components, either alone or in combination. The skilled person will understand how such a distributed processing device can be implemented. The processing device includes a communication module or input/output for receiving data and outputting data to further components.

The one or more processors of the processing device can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

The detailed description and specific examples, while indicating exemplary embodiments of the apparatus, systems and methods, are intended for purposes of illustration only and are not intended to limit the scope of the invention. The Figures are merely schematic and are not drawn to scale. Same reference numerals are used throughout the Figures to indicate the same or similar parts. If the term "adapted to" is used in the claims or description, it is noted the term "adapted to" is intended to be equivalent to the term "configured to". Any reference signs in the claims should not be construed as limiting the scope.

## Claims

1. A method for image reconstruction for application to data acquired in a step-and-shoot computed tomography, CT, scanning protocol applied for scanning an imaging zone of a CT imaging apparatus, the method comprising:
a) receiving (12) a plurality of CT projection datasets, each corresponding to a different axial acquisition position along the step-and-shoot CT scanning protocol, and each comprising measurement data for a plurality of projections at different angular acquisition positions at a given fixed axial acquisition position, and each projection dataset providing data permitting image reconstruction of a respective sub-volume of the imaging zone,
wherein the plurality of CT projection datasets includes at least a first projection dataset permitting image reconstruction of a first sub-volume of the imaging zone and a second projection dataset permitting image reconstruction of a second sub-volume of the imaging zone, wherein said first and second sub-volumes partially spatially overlap across an overlap volume;
b) applying a data modification operation to the CT projection data to yield modified CT projection data, the modification operation comprising synthetically/virtually enlarging (14) a projection field-of-view of at least one projection of at least one of the first and second projection datasets to thereby result in a modified overlap volume between the first and second projection datasets, wherein the modified overlap volume has a larger size than the overlap volume prior to the data modification operation;
c) following the data modification operation, reconstructing (16) at least the first and second CT projection datasets of the modified CT projection data to thereby yield at least a first and second CT volumetric image dataset corresponding respectively to the first and second sub-volume; and
d) registering (18) at least the first and second CT volumetric image datasets to one another.

2. The method of claim 1, wherein the registering is performed based only on image data in the modified overlap volume.

3. The method of claim 1 or 2, wherein the registering comprises constructing a registration mask, the registration mask defining at least a portion of the overlap volume, and wherein the registration is based on only data identified by the registration mask.

4. The method of claim 3,
wherein the method further comprises determining a quality or reliability score for each voxel of at least a portion of the first and/or second volumetric image dataset, and wherein the registration mask is generated in such a way as to include only image data voxels for which the determined quality or reliability scores exceed a pre-defined threshold; and
wherein the determining the quality or reliability score for a given voxel comprises determining what percentage of the projection data used to reconstruct the voxel is measured projection data, and what percentage is projection data generated as part of the data modification procedure, and computing the quality or reliability score for the voxel as a value equal to or proportional to the ratio of measured projection data to generated projection data used to reconstruct the voxel.

5. The method of any preceding claim, wherein the synthetically/virtually enlarging a projection field-of-view of a given projection comprises applying data extrapolation to the projection.

6. The method of claim 5, wherein each projection includes measurement data for detector elements of a 2D array of detector elements, the 2D array comprising rows and columns of detector elements, wherein the data extrapolation for each projection comprises extrapolating additional rows or columns to the projection in the axial direction.

7. The method of claim 6, wherein the extrapolating additional rows or columns for a given projection comprises copying an axially outermost row or column of the projection.

8. The method of claim 6, wherein the extrapolating additional rows or columns for a given projection is achieved based on extrapolation from measurement data of a different projection acquired at a same angular position but an axially adjacent position of the step-and-shoot scanning protocol.

9. The method of claim 8, wherein the extrapolating additional rows or columns is achieved based on application of a trained AI model.

10. The method of any preceding claim, wherein the method comprises performing steps b) to d) for each of a plurality of pairs of axially adjacent CT projection datasets of the plurality of CT projection datasets corresponding to partially overlapping reconstructable sub-volumes.

11. The method of any preceding claim, wherein at least a subset of the CT projection datasets contain a representation of at least a region of a heart of the subject.

12. A computer program product comprising machine-executable code configured, when run on a processor, to cause the processor to perform a method in accordance with any of claims 1-11.

13. A processing device (32) comprising one or more processors (36) configured to:
a) receive (12) a plurality of computed tomography, CT, projection datasets, each corresponding to a different axial acquisition position along a step-and-shoot CT scanning protocol applied for scanning an imaging zone of a CT imaging apparatus, and each comprising measurement data for a plurality of projections at different angular acquisition positions at a given fixed axial acquisition position, and each projection dataset providing data permitting image reconstruction of a respective sub-volume of the imaging zone,
wherein the plurality of CT projection datasets includes at least a first projection dataset permitting image reconstruction of a first sub-volume of the imaging zone and a second projection dataset permitting image reconstruction of a second sub-volume of the imaging zone, wherein said first and second sub-volumes partially spatially overlap across an overlap volume;
b) apply a data modification operation to the CT projection data to yield modified CT projection data, the modification operation comprising synthetically/virtually enlarging (14) a projection field-of-view of at least one projection of at least one of the first and second projection datasets to thereby result in a modified overlap volume between the first and second projection datasets, wherein the modified overlap volume has a larger size than the overlap volume prior to the data modification operation;
c) following the data modification operation, reconstruct (16) at least the first and second CT projection datasets of the modified CT projection data to thereby yield at least a first and second CT volumetric image dataset corresponding respectively to the first and second sub-volume; and
d) register (18) at least the first and second CT volumetric image datasets to one another.

14. The device of claim 13, wherein the registration is performed based on only image data in the modified overlap region.

15. A system comprising:
a processing device (32) in accordance with claim 13 or 14; and
a computed tomography, CT, imaging apparatus (54) operatively coupled with the processing device.
